# EUROPÄISCHE PATENTSCHRIFT

(11) **EP 1 920 574 B1**
(45) Veröffentlichungstag und Bekanntmachung des Hinweises auf die Patenterteilung: **21.09.2011**
(21) Anmeldenummer: 06776580.0
(22) Anmeldetag: 03.08.2006
(51) Int. Cl.: H04L 29/06

(54) **Verfahren zur Anbindung von Internet basierten Foren und Weblogs an eine Push to Talk Plattform**
Method for linking internet-based forums and web logs to a push to talk platform
Procédé pour relier des forums et des blogs sur internet à une plateforme de messagerie vocale instantanée

(30) Priorität: 04.08.2005 DE 102005037315; 29.11.2005 DE 102005057234
(43) Veröffentlichungstag der Anmeldung: 14.05.2008
(73) Patentinhaber: T-Mobile International AG, 53227 Bonn (DE)
(72) Erfinder: BLICKER, Stephan, 53343 Wachtberg-Villip. (DE)
(74) Vertreter: Riebling, Peter
(86) Internationale Anmeldenummer: PCT/EP2006/007673
(87) Internationale Veröffentlichungsnummer: WO 2007/014777

(56) Entgegenhaltungen:
- WO-A-00/47005
- WO-A-2004/014050
- WO-A-2004/086715
- GB-A- 2 412 041
- US-A1- 2005 041 578
- US-A1- 2005 136 952

## Beschreibung

Die Erfindung betrifft ein Verfahren zur Anbindung von Internet basierten Foren und Weblogs an eine Push To Talk (PoC) Plattform.

In der heutigen Internetwelt steigt die Anzahl von Weblogs rasch an. Ein Weblog, oft einfach nur Blog genannt, ist eine Webseite, die periodisch neue Einträge enthält. Neue Einträge stehen an oberster Stelle, ältere folgen in umgekehrt chronologischer Reihenfolge. Gemeinschaften (communities) erscheinen, helfen einander in der Internetwelt und verwenden Textnachrichten, Bilder, usw. in Gästebüchern und Foren. Deshalb ist es wünschenswert, diese Foren und Weblogs auch der Mobil-Welt zugänglich zu machen.

Aus den Veröffentlichungen US 2005/136952 A1, WO 2004/0141050 A1, WO 00/47005 A1, US 2005/041578 A1 oder WO 2004/086715 A1 sind Verfahren zur Verwendung von Push-to-Talk-Technik bekannt, bei denen sowohl Sprache als auch Daten zwischen den Teilnehmern einer Push-to-Talk-Grupppe ausgetauscht, d.h. gesendet und empfangen werden können. Es sind auch Übergänge zum Internet offenbart.

Es ist Aufgebe der Erfindung, ein Verfahren und ein System anzugeben, um internet-basierte Foren und Weblogs an ein Mobilkommunikationssystem anzubinden.

Diese Aufgabe wird erfindungsgemäß durch die Merkmale der unabhängigen Ansprüche gelöst, auf deren Inhalt an dieser Stelle verwiesen wird.

Bevorzugte Ausgestaltungen der Erfindung sind in den abhängigen Ansprüchen angegeben, auf deren Inhalt an dieser Stelle verwiesen wird.

Das erfindungsgemäße Verfahren zur Anbindung von Internet basierten Foren und Weblogs an eine Push To Talk Plattform eines mobilen Kommunikationssystems ist dadurch gekennzeichnet, dass eine neue PoC-Log-Speicherplattform und eine neue Schnittstelle zur existierenden Push To Talk Plattform berücksichtigt wird. Die Push to Talk Plattform kommuniziert über die Schnittstelle mit der neuen PoC-Log-Speicherplattform. Die PoC-Log-Speicherplattform speichert Mediendaten, die von den Endgeräten über die Push to Talk Plattform übertragen wurden und macht diese für das Internet und für andere mobile Teilnehmer zugänglich. Ähnlich wie in Webforen und Weblogs, werden die Mediendaten dem Endkunden gegenüber zugänglich gemacht. Zusätzlich dazu kann das Endgerät diese Daten auch selber über die Push to Talk Plattform wieder abrufen. Dazu ist ein neuer Client, beispielsweise in Form eines lean http Clienten, auf dem Endgerät vorgesehen.

Heutige Internet-basierte Webforen und Weblogs erfreuen sich zunehmender Beliebtheit. Diese Erfindung stellt einen Weg dar, das Push to Talk System als Transportsystem zu nutzen, um eine einfache mobile Anbindung an Webforen und Weblogs zu gewährleisten. Zusätzlich können nicht nur textbasierte Beiträge sondern auch Sprach-/Videobeiträge geschrieben und übertragen werden.

Die PoC Plattform dient somit als Ermöglichungsdienst, das heißt es erfolgt eine Verwendung von PoC als Ermöglicher für "PoC Logs".

Die Erfindung bezieht sich auf Verfahren, um Weblogs im mobilen Bereich mit Hilfe des Push-to-Talk als Ermöglichungssystem anzubieten. Die Verfahren enthalten folgende Dienste-Verbesserungen:
- Einführung einer neuen intelligenten Gästebuch- und Foren-kompatiblen PoC-Log-Speicherplattform für Push-to-Talk für verschiedene Arten von Medien.
- Einführung neuer Schnittstellen auf der PoC-Plattform, um PoC-Nachrichten an die PoC-Log-Speicherplattform weiterzuleiten.
- Einführung neuer Schnittstellenfähigkeiten zwischen Endgerät und PoC-Server, um Log-Information (Spitznamen, Titel, MSISDNs) vom Endgerät abzufragen und abzurufen.
- Einführung neuer Schnittstellenfähigkeiten zwischen PoC-Server und Internet/Dritten, um Gästebücher beziehungsweise Foren zu erstellen, zu überwachen, zu kontrollieren und zu steuern.

### Dienstleistungsaspekte

- Der Mobilfunk-Netzbetreiber, der eine Plattform betreibt (hostiert) bietet auch PoC-Logs für eigene Zwecke sowie für Dritte und Endkunden an.
- Der Mobilfunk-Netzbetreiber bietet Kanäle für Dritte und Endkunden an, zum Erstellen und Anbieten Mobilfunk-spezifischer Logs verschiedener Medientypen.
- Der Mobilfunk-Netzbetreiber entwickelt eine Plattform für das Erstellen/Anbieten, das Speichern, das Abfragen und das Rückgewinnen von Logs, die verschiedene Arten von Medien tragen;
- Der Mobilfunk-Netzbetreiber bietet PoC Logs an; der Mobilfunk-Netzbetreiber bietet eine PoC-Log-Schnittstelle zu Dritten an; der Mobilfunk-Netzbetreiber bietet PoC-Logs für direkte Internetkunden an.

### Geschäftsmöglichkeiten für Mobilfunk-Netzbetreiber

Der Mobilfunk-Netzbetreiber, der die Plattform betreibt (hostiert), erzielt folgende Vorteile:
+ Benutzerfreundlichkeit von PoC (nicht nur schriftliche Logs, sondern auch Sprach-Logs möglich durch einfachen Drücken eines Knopfes) für mobile Leute.
+ Einfaches Vergebührungsmodell unter Verwendung eines bestehenden PoC-Vergebührungsmodells für Endkunden, keine zusätzlichen Gebühren für das Verwenden der Mobilfunk-Netzwerkbetreiber-Logs (integrierte Preisgestaltung), vielleicht zusätzliche Gebühren für das Erstellen von Dritt-Logs und das Erstellen von Endkunden-Logs.
+ Gemeinschaften im Internet nehmen noch zu, Verwendung von Weblogs nimmt immer noch stark zu, weshalb dann nicht das Potential für das Mobilfunk-Geschäft nutzen.
+ Der Mobilfunk-Netzbetreiber besitzt und liefert die PoC-Kundenbasis (attraktiv für Dritte, die Mobilfunk-spezifische Logs anbieten).
+ Der Mobilfunk-Netzbetreiber liefert PoC Infrastruktur, zusätzliche Investition nur bezogen auf neue PoC-Log-Speicherplattform.
+ Der Mobilfunk-Netzbetreiber kann Kommunikationsverhalten einschließlich der Kundenbasis von Dritten überwachen, steuern und kontrollieren.
+ Leitungsvermittelte (Cs: circuit switched) und paketvermittelte (PS: packet switched, wenn anwendbar) Mobilfunktelefonate/-Verkehr können zunehmen für den Fall, dass PoC-Logs die Möglichkeit bieten, leicht MSISDNs, Mailadressen, PoC-Adressen usw. in den Logs zu hinterlegen.
+ PS-Anrufe können leicht mit allgemeiner PoC-Infrastruktur kombiniert werden unter Verwendung von IMS (Multiplikator für das Einführen von IMS)
+ Leute, die es zuvor nicht wussten und es durch die Verwendung von PoC-Logs kennenlernten, können Cs/PS Anrufe zueinander initiieren, Einnahmezuwachspotential, ARPU-Steigerungspotential, weil Gemeinschaften einander über Anrufe helfen.
+ Steigern des Mobilfunkverkehrs aufgrund einer Beteiligung und Interaktion von den Gemeinschaften der festen Internetwelt.
+ Entkopplung von Gemeinschaften, die dasselbe PoC-Endgerät verwenden. So kann ein breiteres Spektrum von Benutzern aufgrund der Tatsache erreicht werden, dass PoC-Benutzer mittels eines PoC-Endgeräts mit einem Forum von Benutzern kommunizieren können, die nicht unbedingt einen eigenen PoCkompatiblen, d.h. PoC-fähigen Handapparat brauchen,

### Technische Wirkung

+ Einrichten einer PoC-Log-Speicherplattform für das Schaffen, Anbieten, Speichern, Abfragen und Rückgewinnen von PoC-Logs.
+ Einrichten eines PoC-Protokolls vom Endgerät zur PoC-Log-Speicherplattform, um Log-Information (Inhalt, Namen, MSISDNs, Spitznamen, Zeitstempel, Stimmungen usw.) abzurufen.

Ein Ausführungsbeispiel der Erfindung wird nachfolgend anhand der Zeichnungen erläutert.
- Figur 1: zeigt eine Möglichkeit der Charakterisierung und Struktur von PoC-Logs.
- Figur 2: zeigt die allgemeine Architektur des PoC-Log Dienstes.
- Figur 3: zeigt das Senden eines Beitrag zu Logs unter Verwendung von PoC und IMS.
- Figur 4: zeigt ein Abrufen von Beiträgen von Logs unter Verwendung PoC und IMS.
- Figur 5: zeigt ein Abrufen eines Logs durch Absuchen von Interessengebieten.

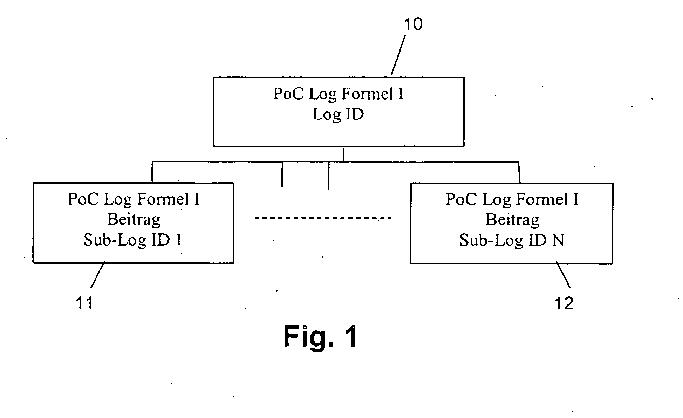

Figur 1 zeigt die Charakterisierung und Struktur von PoC-Logs. Jedes Log 10 hat eine eindeutige Kennzeichnung, beispielsweise in Form einer LogID. Die Kennzeichnung wird generiert, wenn das PoC-Log erstellt wird. Die Kennzeichnung kann Log-spezifische und Provider-spezifische Information enthalten. Jeder Beitrag 11, 12 zu einem PoC-Log 10 hat eine eindeutige Unterkennzeichnung, Sub-LogID, und kann Information über den Nachrichtenlieferanten enthalten (z.B. MSISDN, E-Mail, PoC-Gruppen-Adressen usw.). Das PoC-Log 10 kann verschiedene Arten von Medien (Stimme, Text, Bilder...) enthalten, je nach den Endgeräte-Einstellungen und Wahlmöglichkeiten des Nachrichtenlieferanten.

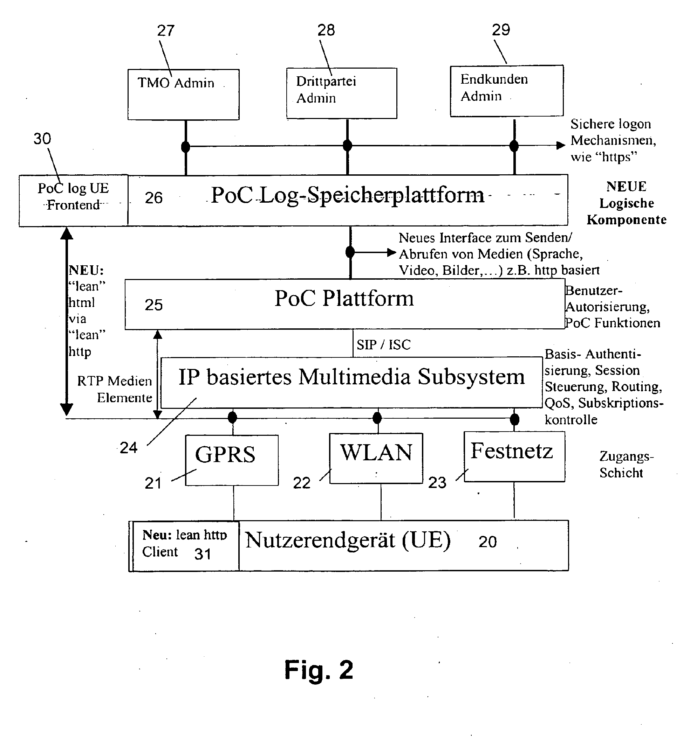

### Die allgemeine Architektur ist in Figur 2 dargestellt.

Nutzerendgeräte 20 erhalten in bekannter Weise über verfügbare Zugangsnetzwerke, beispielsweise GPRS 21, WLAN 22, Festnetz 23, Zugang zu einem IP Multimedia Subsystem (IMS) 24. Das IMS 24 ist zuständig für die Authentifizierung der Nutzerendgeräte 20, für die Sitzungssteuerung, das Routing, sowie Qualitätskontrolle (Qos) und Subskriptionskontrolle. Die Zugangsnetzwerke 21, 22, 23 sind ferner mit einer Push to Talk over Cellular (PoC) Plattform 25 verbunden, welche den Benutzern entsprechende PoC Dienste zur Verfügung stellt und eine Benutzerautorisierung für die PoC Dienste vornimmt. Das IMS 24 ist über eine SIP/ISC Schnittstelle mit der PoC Plattform 25 verbunden.

Die Architektur des Dienstes ist durch eine neue PoC-Log-Speicherplattform 26 charakterisiert, die über eine Schnittstelle mit der PoC Plattform 25 verbunden ist. Über diese Schnittstelle werden Log Medien zwischen der PoC-Log-Speicherplattform 26 und der PoC Plattform 25 übertragen. Die PoC-Log-Speicherplattform 26 bietet ferner Schnittstellen 27, 28, 29 für Verwaltung, Erstellung und das Löschen von Logs an. Die Schnittstellen 27, 28 ,29 könnten vom Mobilfunk-Netzbetreiber durch dritte Administratoren oder sogar von Endkunden verwendet werden. Alle Arten von Benutzern können neue Logs erstellen, und sie löschen und verwalten. Die Logs enthalten Teilnehmerspezifische Information und Zugriffsrechte für den Teilnehmer und eine Referenz zu den Logs. Die PoC-Log-Speicherplattform 26 enthält außerdem ein sogenanntes Lean Front End 30 für die Endgeräte 20, um Logs, Log-Information und die Fähigkeiten abzurufen, ein Log oder Medien von Logs über das Endgerät auszuwählen. Deshalb kann der im Endgerät implementierte PoC-Client mit einem ebenfalls im Endgerät vorgesehenen Log Lean HTTP Client 31 interagieren. Das Endgerät 20 ist deshalb auch leicht impaktiert, wenn es den PoC-Logdienst unterstützt.

### Anwendungsbeispiele

Für alle Anwendungsbeispiele wird angenommen, dass Logs auf der PoC-Log-Speicherplattform 26 bereits mit Hilfe der Anwenderschnittstellen 27, 28 ,29 vom Mobilfunk-Netzbetreiber, den Dritten oder den Endkunden mit Hilfe von wohl bekannten Protokoll-Mechanismen wie http (Benutzername und Kennwort) erstellt worden sind. Deshalb können die wichtigsten neuen Dienstleistungsszenarien durch Senden von Logbeiträgen über PoC, Rückgewinnung der Loginformation über PoC und Abfrage von Log-Informationen und Abfrage-Logs (Such-Logs und Unter-Logs vor dem Senden /Rückholen von Logs) charakterisiert werden.

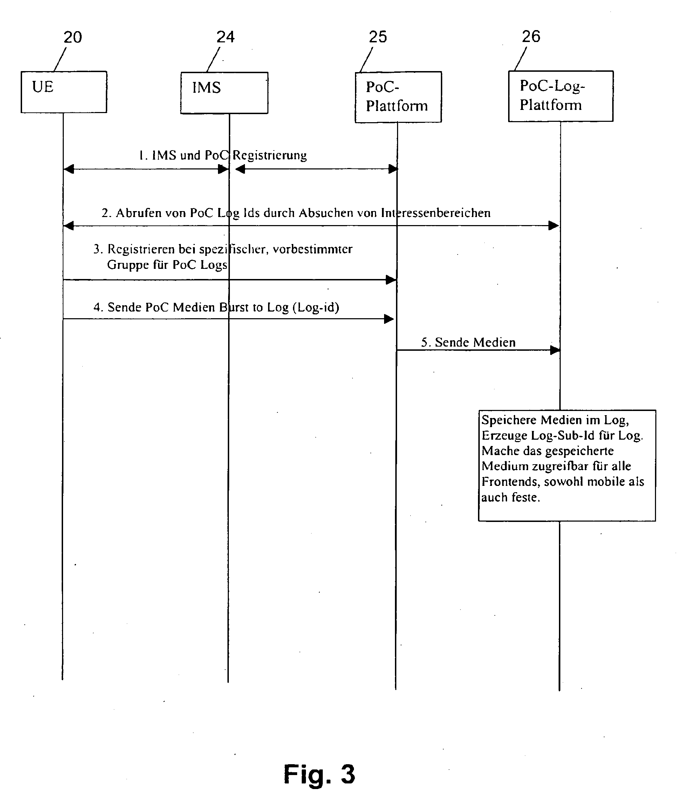

Figur 3 zeigt das Senden eines Beitrag zu Logs unter Verwendung von PoC und IMS. Im ersten Schritt erfolgt eine IMS und PoC Registrierung des Endgeräts 20 beim IMS 24 und der PoC Plattform 25. Im zweiten Schritt erfolgt ein Abrufen von PoC Logs IDs in der PoC-Log-Speicherplattform 26 durch Absuchen von Interessenbereichen. In einem dritten Schritt kann sich der Nutzer mittels seinem Endgerät 20 bei der PoC Plattform 25 bei einer spezifischen, vorbestimmten PoC Gruppe für PoC Logs registrieren. In einem vierten und fünften Schritt können vom Endgerät PoC Medien mittels Datenburtsts zur PoC-Log-Speicherplattform 26 und zum Log, identifiziert durch die Log ID, gesendet werden. Die Medien werden im Log gespeichert und es wird eine Sub-Log ID für den entsprechenden Beitrag erzeugt. Das gespeicherte Medium ist nun unter der Sub-Log ID von allen Frontends, sowohl mobile als auch feste, abrufbar.

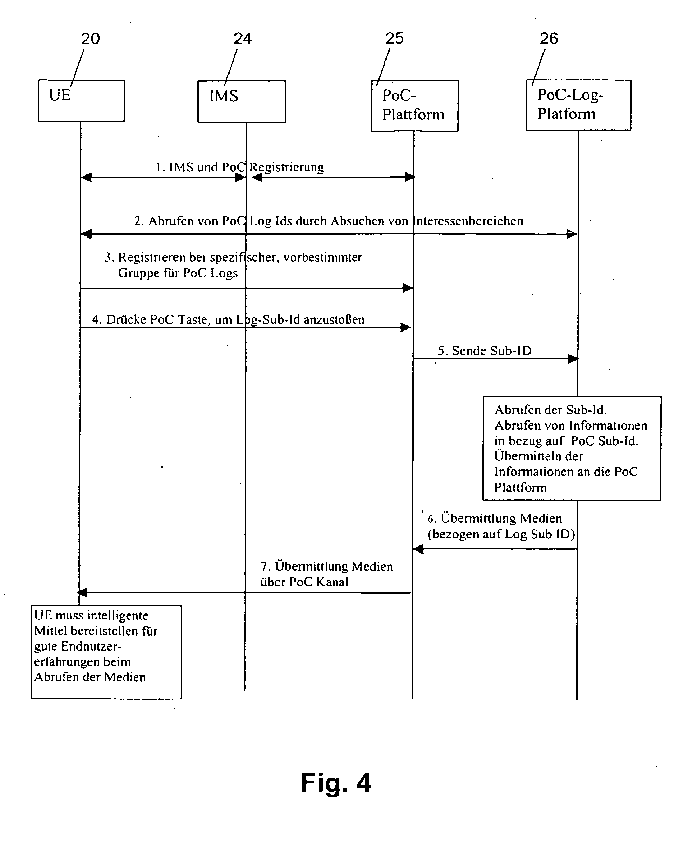

Figur 4 zeigt ein Abrufen von Beiträgen von Logs unter Verwendung PoC und IMS. Im ersten Schritt erfolgt eine IMS und PoC Registrierung des Endgeräts 20 beim IMS 24 und der PoC Plattform 25. Im zweiten Schritt erfolgt ein Abrufen von PoC Logs IDs in der PoC-Log-Speicherplattform 26 durch Absuchen von Interessenbereichen. In einem dritten Schritt kann sich der Nutzer mittels seinem Endgerät 20 bei der PoC Plattform 25 bei einer spezifischen, vorbestimmten PoC Gruppe für PoC Logs registrieren. In einem vierten Schritt kann der Benutzer durch Drücken einer PoC Taste an seinem Endgerät 20 eine Abfrage eines Log über die Log-Sub ID anstoßen. Diese Nachricht wird in einem fünften Schritt von der PoC Plattform 25 and die PoC-Log-Speicherplattform 26 übermittelt. Bei der PoC-Log-Speicherplattform 26 werden dann zur Log Sub ID gehörende Informationen, z.B. Beiträge und Medien, abgerufen und im sechsten Schritt an die PoC Plattform 25 übermittelt. In einem siebten Schritt erfolgt dann eine Übertragung der Informationen über einen PoC Kanal von der PoC Plattform 25 an das Endgerät 20. Das Endgerät 20 stellte intelligente Mittel bereit zum Anrufen der Medien.

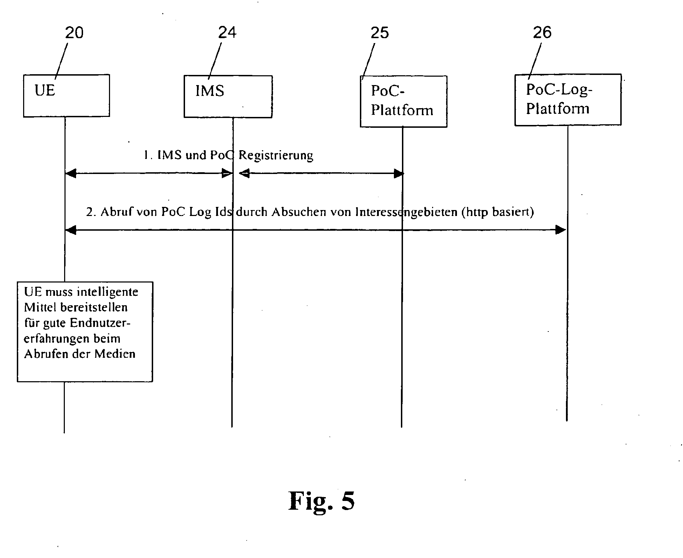

Figur 5 zeigt ein Abrufen eines Logs durch Absuchen von Interessengebieten. In einem ersten Schritt erfolgt eine IMS und PoC Registrierung des Endgeräts 20 beim IMS 24 und der PoC-Plattform 25. Im zweiten Schritt erfolgt ein direktes Abrufen von PoC Logs IDs in der PoC-Log-Speicherplattform 26 durch Absuchen von Interessengebieten. Das Endgerät 20 stellt hierfür intelligente Mittel bereit zum Anrufen der Medien.

### Ausblick

Die PoC-Log-Speicherplattform 26 bietet die Möglichkeit, Loginformation zu erstellen, zu senden, abrufen und abzufragen. Außerdem könnte es in Zukunft möglich sein, die Benutzeradresse von der Log-ID-Information zu nehmen und sofort einen Anruf über IMS zu dem Logteilnehmer zu beginnen. Mit dieser Art von Dienst könnten die Dienste-Interaktions-Szenarien rasch zunehmen, und IMS wird die Lösung im Mobilfunk-Netz sein.

## Patentansprüche

1. Verfahren zum Anpassen einer PoC Plattform (25) an die Welt der Internetforen, wobei das Übertragen von Daten über eine PoC-Log-Speicherplattform (26) und eine Schnittstelle von einer PoC Plattform (25) an die PoC-Log-Speicherplattform (26) und umgekehrt, wobei die PoC-Log-Speicherplattform (26) Mediendaten in Form von Logs (10) speichert, die von mobilen Endgeräten (20) über die PoC Plattform (25) übertragen werden, und die Mediendaten für das Internet und für andere mobile Teilnehmer zugänglich macht, wobei die PoC Plattform (25) als Transportsystem verwendet wird, um die mobilen Endgeräte (20) an Webforen und Weblogs anzubinden, wobei zum Senden oder Abrufen eines Beitrags zu Logs unter Verwendung von PoC und IMS folgende Schritte durchgeführt werden: IMS und PoC Registrierung des Endgeräts (20) beim IMS (24) und der PoC Plattform (25), das Verfahren **dadurch gekennzeichnet**:
Abrufen von PoC Logs IDs in der PoC-Log-Speicherplattform (26) durch Absuchen von Interessenbereichen,
Registrieren des Nutzers mittels seines Endgeräts (20) bei der PoC Plattform (25) bei einer spezifischen, vorbestimmten PoC Gruppe für PoC Logs,
- dass zum Senden eines Beitrags vom Endgerät PoC Medien mittels Datenbursts zur PoC-Log-Speicherplattform (26) und zum Log auf der PoC-Log-Speicherplattform (26), identifiziert durch die Log ID, gesendet werden, und die Medien im Log gespeichert und eine Sub-Log ID für den entsprechenden Beitrag erzeugt werden, wobei das gespeicherte Medium unter der Sub-Log ID von allen Frontends, sowohl mobile als auch feste, abrufbar ist,
- dass zum Abrufen von Beiträgen der Benutzer durch Drücken einer PoC Taste an seinem Endgerät (20) eine Abfrage eines Log über die Log-Sub ID anstößt, und diese Nachricht von der PoC Plattform (25) an die PoC-Log-Speicherplattform (26) übermittelt wird, wobei bei der PoC-Log-Speicherplattform (26) zur Log Sub ID gehörende Informationen abgerufen und an die PoC Plattform (25) übermittelt werden, und eine Übertragung der Informationen über einen PoC Kanal von der PoC Plattform (25) an das Endgerät (20) erfolgt.

2. Verfahren nach einem der vorhergehenden Ansprüche, **dadurch gekennzeichnet, dass** für ein Abrufen der Daten ein lean http Client (31) auf dem Endgerät (20) implementiert ist.

3. Verfahren nach einem der vorhergehenden Ansprüche, **dadurch gekennzeichnet, dass** in den Mediendaten sowohl textbasierte Beiträge als auch Sprach-/Videobeiträge übertragen werden.

4. System und Anordnung für das Anpassen von Push to Talk Diensten an die Welt der Intemetforen zur Durchführung des Verfahrens gemäß den Ansprüchen 1 bis 3, **gekennzeichnet durch** das Verbinden einer PoC-Log-Speicherplattform (26) und einer Schnittstelle von einer PoC Plattform (25) zu der PoC-Log-Speicherplattform (26), wobei in der PoC-Log-Speicherplattform PoC-Logs (10) gespeichert sind.

5. System und Anordnung nach Anspruch 4, **dadurch gekennzeichnet, dass** jedes PoC-Log (10) eine eindeutige Kennzeichnung aufweist.

6. System und Anordnung nach Anspruch 5, **dadurch gekennzeichnet, dass** die Kennzeichnung generiert wird, wenn das PoC-Log (10) erstellt wird.

7. System und Anordnung nach einem der Ansprüche 5 oder 6, **dadurch gekennzeichnet, dass** die Kennzeichnung Log-spezifische und Provider-spezifische Information enthält.

8. System und Anordnung nach einem der Ansprüche 4 bis 7, **dadurch gekennzeichnet, dass** das PoC-Log (10) verschiedene Beiträge umfassend verschiedene Arten von Medien, wie Sprache, Text, Bilder, enthält.

9. System und Anordnung nach einem der Ansprüche 4 bis 8, **dadurch gekennzeichnet, dass** jeder Beitrag (11, 12) zu einem PoC-Log (10) eine eindeutige Unterkennzeichnung aufweist.

10. System und Anordnung nach einem der Ansprüche 4 bis 9, **dadurch gekennzeichnet, dass** jeder Beitrag (10, 11) Information über den Nachrichtenlieferanten enthält.

## Claims

1. Method for adapting a PoC platform (25) to the world of Internet forums, wherein transmitting data via a PoC log storage platform (26) and an interface from a PoC platform (25) to the PoC log storage platform (26) and vice versa, wherein the PoC log storage platform (26) stores media data in the form of logs (10), which are transmitted from mobile terminals (20) via the PoC platform (25), and makes the media data accessible for the Internet and for other mobile subscribers, wherein the PoC platform (25) is used as a transport system to connect the mobile terminals (20) to web forums and web logs, wherein to transmit or retrieve a contribution to logs using PoC and IMS, the following steps are carried out:
IMS and PoC registration of the terminal (20) at the IMS (24) and the PoC platform (25), the method **characterised by**:
retrieving of PoC logs IDs in the PoC log storage platform (26) by searching areas of interest,
registering the user by means of his terminal (20) at the PoC platform (25) for a specific, predetermined PoC group for PoC logs,
- in that to transmit a contribution from the terminal, PoC media are transmitted by means of data bursts to the PoC log storage platform (26) and to the log on the PoC log storage platform (26), identified by the log ID, and the media are stored in the log and a sub-log ID is produced for the corresponding contribution, wherein the stored medium can be retrieved under the sub-log ID from all front ends, both mobile and fixed,
- in that to retrieve contributions, the user initiates a query of a log via the log sub ID by pressing a PoC key at his terminal (20), and this message is transmitted from the PoC platform (25) to the PoC log storage platform (26), wherein at the PoC log storage platform (26), information belonging to the log sub ID is retrieved and transmitted to the PoC platform (25), and transfer of information is effected via a PoC channel from the PoC platform (25) to the terminal (20).

2. Method according to one of the preceding claims, **characterised in that** to retrieve the data, a lean http client (31) is implemented on the terminal (20).

3. Method according to one of the preceding claims, **characterised in that** in the media data, both text-based contributions and voice/video contributions are transmitted.

4. System and configuration for adapting Push-to-Talk services to the world of Internet forums for carrying out the method according to claims 1 to 3, **characterised by** the connection of a PoC log storage platform (26) and an interface from a PoC platform (25) to the PoC log storage platform (26), wherein PoC logs (10) are stored in the PoC log storage platform.

5. System and configuration according to claim 4, **characterised in that** each PoC log (10) has a unique identifier.

6. System and configuration according to claim 5, **characterised in that** the identifier is generated when the PoC log (10) is created.

7. System and configuration according to one of claims 5 or 6, **characterised in that** the identifier contains log-specific and provider-specific information.

8. System and configuration according to one of claims 4 to 7, **characterised in that** the PoC log (10) contains various contributions comprising different types of media, such as voice, text, images.

9. System and configuration according to one of claims 4 to 8, **characterised in that** each contribution (11, 12) to a PoC log (10) has a unique sub-identifier.

10. System and configuration according to one of claims 4 to 9, **characterised in that** each contribution (10, 11) contains information about the supplier of the message.

## Revendications

1. Procédé pour adapter une plate-forme PoC (25) au domaine des forums Internet, étant précisé que la transmission de données se fait par l'intermédiaire d'une plate-forme de stockage PoC-Log (26) et d'une interface d'une plate-forme PoC (25) vers la plate-forme de stockage PoC-Log (26) et inversement, que la plate-forme de stockage PoC-Log (26) stocke des données de médias sous forme de logs (10) qui sont transmis par des terminaux mobiles (20) par l'intermédiaire de la plate-forme PoC (25), et rend les données de médias accessibles pour Internet et pour d'autres abonnés mobiles, que la plate-forme PoC (25) est utilisée comme système de transport pour relier les terminaux mobiles (20) à des forums ou blogs, et que pour envoyer ou appeler une contribution à des logs à l'aide de PoC et IMS, les étapes suivantes sont exécutées :
- enregistrement IMS et PoC du terminal (20) auprès de l'IMS (24) et de la plate-forme PoC (25),
le procédé étant **caractérisé en ce que**
- les PoC Logs ID sont appelées dans la plate-forme de stockage PoC-Log (26) grâce à une recherche de domaines d'intérêt,
- l'utilisateur est enregistré à l'aide de son terminal (20) auprès de la plate-forme PoC (25) pour un groupe PoC spécifique prédéfini pour des PoC Logs,
- pour envoyer une contribution à partir du terminal PoC, des médias sont envoyés à l'aide de paquets de données à la plate-forme de stockage PoC-Log (26) et au log sur celle-ci en étant identifiés par la Log ID, les moyens sont stockés dans le Log, et une sous-Log ID est générée pour la contribution correspondante, étant précisé que le média stocké est apte à être appelé sous la sous-Log ID par tous les ordinateurs frontaux, aussi bien mobiles que fixes,
- **en ce que** pour appeler des contributions, l'utilisateur déclenche un appel d'un Log par l'intermédiaire de la sous-Log ID en appuyant sur une touche PoC de son terminal (20), et ce message est transmis par la plate-forme PoC (25) à la plate-forme PoC-Log (26), étant précisé qu'au niveau de cette dernière (26) des informations appartenant à la sous-Log ID sont appelées et sont transmises à la plate-forme PoC (25), et qu'une transmission des informations de cette dernière (25) au terminal (20) se fait par l'intermédiaire d'un canal PoC.

2. Procédé selon l'une des revendications précédentes, **caractérisé en ce que** pour un appel des données, un client lean http (31) est implémenté sur le terminal (20).

3. Procédé selon l'une des revendications précédentes, **caractérisé en ce que** dans les données de médias sont transférées aussi bien des contributions à base de texte que des contributions vocales/vidéo.

4. Système et dispositif pour adapter des services de messagerie vocale instantanée au domaine des forums Internet, pour la mise en oeuvre du procédé selon les revendications 1 à 3, **caractérisé par** la liaison d'une plate-forme de stockage PoC-Log (26) et d'une interface d'une plate-forme PoC (25) avec la plate-forme de stockage PoC-Log (26), étant précisé que des PoC-Logs (10) sont stockés dans la plate-forme de stockage PoC-Log.

5. Système et dispositif selon la revendication 4, **caractérisé en ce que** chaque PoC-Log (10) comporte une identification claire.

6. Système et dispositif selon la revendication 5, **caractérisé en ce que** l'identification est générée lorsque le PoC-Log (10) est établi.

7. Système et dispositif selon l'une des revendications 5 ou 6, **caractérisé en ce que** l'identification contient des informations propres au Log ou des informations propres au fournisseur.

8. Système et dispositif selon l'une des revendications 4 à 7, **caractérisé en ce que** le PoC-Log (10) contient différentes contributions comprenant différents types de médias, tels que de la voix, du texte, des images.

9. Système et dispositif selon l'une des revendications 4 à 8, **caractérisé en ce que** chaque contribution (11, 12) à un PoC-Log (10) comporte une sous-identification claire.

10. Système et dispositif selon l'une des revendications 4 à 9, **caractérisé en ce que** chaque contribution (10, 11) contient des informations sur les fournisseurs de messages.
